# EUROPEAN PATENT APPLICATION

(11) **EP 4 841 440 A1**
(43) Date of publication of application: **18.11.2026**
(21) Application number: 25175573.2
(22) Date of filing: 12.05.2025
(51) Int. Cl.: G06F 9/48, G06F 9/50

(54) **DISTRIBUTED EVENT SCHEDULER FOR MULTI-CORE PROCESSORS**

(71) Applicant: Nokia Solutions and Networks Oy, 02610 Espoo (FI)
(72) Inventor: DEBURCHGRAEVE, Wouter, Willebroek (BE)
(74) Representative: Nokia EPO representatives

(57) **Abstract**

Techniques for facilitating implementation of a Distributed Event Scheduler (DES) on a core of a multi-core processor are described. In operation, generation of a micro-event corresponding to a main event being executed at a first core of the multi-core processor is detected. Thereafter, availability of the first core is determined for executing the micro-event. In response to the determination, execution of the micro-event is allocated to the first core.

## Description

### BACKGROUND

In recent years, there has been a significant increase in reliance on computing devices for delivering a wide range of services across various domains, such as communication, multimedia processing, real-time analytics, automation, and artificial intelligence. These services are executed through a series of computational tasks, events, or processes managed by the processors embedded within such computing devices. As the demand for more sophisticated and responsive services has grown, so too have the corresponding processing requirements placed upon these computing devices.

### SUMMARY

According to a first aspect, there is described an apparatus for implementing a Distributed Event Scheduler (DES) on a first core of a multi-core processor. The apparatus comprises: at least the first core and at least one memory storing instructions that, when executed by at least the first core, cause the apparatus at least to: detect generation of a micro-event corresponding to a main event being executed at the first core of the multi-core processor; determine availability of the first core for executing the micro-event; and allocate execution of the micro-event to the first core based on the determination.

According to some examples, at least the first core further causes the apparatus to determine availability of a second core of the multi-core processor for executing the micro-event upon determining the first core to be unavailable for executing the micro-event.

According to some examples, at least the first core further causes the apparatus to offload the micro-event to the second core upon determining the second core to be available for executing the micro-event.

According to some examples, at least the first core further causes the apparatus to offload the micro-event to an event queue corresponding to a Centralized Event Scheduler (CES) associated with the multi-core processor for executing the micro-event upon determining the second core to be unavailable for executing the micro-event.

According to some examples, to identify that the second core is unavailable, at least the first core causes the apparatus to detect a request for the second core from a CES associated with the multi-core processor.

According to some examples, at least the first core causes the apparatus to determine the availability of the second core based on a bitmap comprising a plurality of bits corresponding to a plurality of cores of the multi-core processor.

According to some examples, at least the first core causes the apparatus to maintain a first event sequence comprising dependency information associated with at least one dependent event, wherein the dependency information indicates that the at least one dependent event is reliant on execution of the micro-event for execution, and wherein at least the first core further causes the apparatus to: update the dependency information to indicate that the execution of the micro-event is complete upon execution of the micro-event on the first core; and allocate execution of the at least one dependent event to the first core based on availability of the first core for execution of the at least one dependent event.

According to some examples, at least the first core causes the apparatus to maintain a first event sequence comprising dependency information associated with a plurality of micro-events corresponding to the main event, wherein dependency information associated with the micro-event indicates that the micro-event is reliant on execution of another event at a core other than the first core, and wherein the at least the first core further causes the apparatus to: analyze the dependency information associated with the micro-event to determine that the execution of the other event at the other core is complete; and allocate execution of the micro-event to the first core based on availability of the first core for execution of the at least one dependent event.

According to some examples, at least the first core causes the apparatus to maintain a first event sequence comprising dependency information associated with a plurality of micro-events corresponding to the main event, wherein dependency information associated with the micro-event indicates that the micro-event is reliant on execution of another event at the second core, and wherein the at least the first core further causes the apparatus to: determine the second core to be unavailable for executing the micro-event; and register the micro-event and the dependency information associated with the micro-event in a second event sequence maintained by the second core to facilitate execution of the micro-event on the second core.

According to a second aspect, there is described a method for implementing a Distributed Event Scheduler (DES) on a first core of a multi-core processor, the method comprising: detecting generation of a micro-event corresponding to a main event being executed at the first core of the multi-core processor; determining availability of a second core of the multi-core processor for executing the micro-event; and offloading execution of the micro-event to the second core based on the determining.

According to some examples, prior to the determining, the method comprises ascertaining the first core to be unavailable for executing the micro-event.

According to some examples, the method comprises offloading the micro-event to an event queue corresponding to a Centralized Event Scheduler (CES) associated with the multi-core processor for executing the micro-event upon determining the second core to be unavailable for executing the micro-event.

According to some examples, the determining comprises detecting a request for the second core from a CES associated with the multi-core processor.

According to some examples, determining the availability of the second core is based on a bitmap comprising a plurality of bits corresponding to a plurality of cores of the multi-core processor.

According to a third aspect, there is described a method for implementing a Distributed Event Scheduler (DES) on a first core of a multi-core processor, the method comprising: detecting generation of a micro-event corresponding to a main event being executed at the first core of the multi-core processor; determining a second core of the multi-core processor to be unavailable for executing the micro-event; and adding the micro-event to an event queue corresponding to a Centralized Event Scheduler (CES) associated with the multi-core processor for executing the micro-event.

According to some examples, prior to the determining, the method comprises ascertaining the first core to be unavailable for executing the micro-event.

According to some examples, the determining comprises detecting a request for the second core from the CES.

According to some examples, the determining is based on a bitmap comprising a plurality of bits corresponding to a plurality of cores of the multi-core processor.

### BRIEF DESCRIPTION OF DRAWINGS

Fig. 1 illustrates schematic of an apparatus for facilitating implementation of a Distributed Event Scheduler (DES) on a core of a multi-core processor, in accordance with an example of the present subject matter.
Fig. 2 illustrates the schematic of the apparatus for facilitating implementation of the DES on the core of the multi-core processor, in accordance with another example of the present subject matter.
Fig. 3 illustrates a method for implementing the DES on the core of the multi-core processor, in accordance with an example of the present subject matter.
Fig. 4 illustrates the method for implementing the DES on the first core of the multi-core processor, in accordance with another example of the present subject matter.
Fig. 5 illustrates the method for implementing the DES on the first core of the multi-core processor, in accordance with yet another example of the present subject matter.

Throughout the drawings, identical reference numbers designate similar, but not necessarily identical, elements. The drawings provide examples and/or implementations consistent with the description; however, the description is not limited to the examples and/or implementations provided in the drawings.

### DETAILED DESCRIPTION

To meet the evolving demands for sophisticated and responsive services, one conventional approach has been to enhance the processing power of the processors responsible for executing these services. In particular, increasing the clock speed and optimizing the instruction execution pipeline of single-core processors have yielded performance improvements. However, the exponential growth in processing requirements has begun to outpace the improvements achieved through enhancements to single-core processor designs. Further, physical limitations such as heat dissipation, power consumption, and diminishing returns on performance gains from higher clock speeds have constrained the effectiveness of this approach.

An alternative approach for addressing the exponential growth in processing requirements involves the use of parallel processing through multi-core processors. Multi-core processors consist of two or more independent cores integrated within a single processing unit, each capable of executing instructions concurrently. This architecture enables a computing device to divide a larger processing workload into smaller, parallelizable tasks that can be executed simultaneously across multiple cores. By distributing computational tasks in this manner, multi-core processors are able to significantly increase throughput and reduce execution times, especially for applications designed to leverage parallelism.

For example, in multimedia applications such as video encoding or real-time rendering, different frames or segments of data can be processed in parallel by different cores, resulting in faster performance and reduced latency. Similarly, in server environments where multiple client requests or background services need to be handled concurrently, multi-core processors allow each core to independently manage separate threads or processes, thereby improving responsiveness and system scalability.

To efficiently manage the execution of a plurality of events or tasks, multi-core processors typically incorporate an event scheduler. The event scheduler maintains an event queue that includes a plurality of events for execution by the independent cores of the multi-core processor. The event scheduler identifies the events for execution from the event queue and allocates the cores of the multi-core processor for executing the events. The event scheduler allocates the independent cores of the processor based on various factors, such as event priority, core load, event dependencies, the processing capabilities of each core, power consumption constraints, thermal considerations, and the need for efficient inter-core communication. There are situations where execution of an event by one of the independent cores of the multi-core processor may generate a micro-event corresponding to the event. In such situations, the micro-event is also added to the event queue for allocation of a core for execution.

To enable the multi-core processors to handle the ever-increasing processing requirements, the multi-core processors are scaled horizontally. In horizontal scaling, additional independent cores are added to the multi-core processor followed by coupling of the additional independent cores to the event scheduler. This enables distribution of the workload across a larger number of cores, enhancing the overall processing capacity and ensuring that the multi-core processor is able to manage an increasing number of events or processes concurrently, thus maintaining optimal system performance and responsiveness.

With an increase in processing requirements, the number of events included in the event queue also increases. As the number of events increases, the event scheduler is tasked with managing and allocating these events to the available cores. However, in such a scenario, the event scheduler itself can become a bottleneck in terms of efficiently allocating cores of the multi-core processor. This occurs because the scheduler needs to continuously assess and allocate available cores based on factors such as core load, event dependencies, and priority. As the number of events in the queue increases, the time spent by the event scheduler to manage these allocations also increases, leading to delays in executing events.

The delay in scheduling can result in underutilization of the available cores, as some cores may remain idle while waiting for the scheduler to allocate tasks. In such a situation, full potential of the multi-core processor may not be leveraged, leading to inefficiencies in processing. This issue becomes particularly significant as the volume and complexity of events continue to grow, and the event scheduler struggles to keep up with the demands of rapid core allocation.

In such cases, the processing power of the multi-core processor may not be fully realized, and the required performance and responsiveness thresholds may not be met, especially in applications with stringent latency and throughput requirements.

According to examples of the present subject matter, techniques for facilitating implementation of a Distributed Event Scheduler (DES) on a core of a multi-core processor are described.

In an example, generation of a micro-event corresponding to a main event being executed at a first core of the multi-core processor is detected. Thereafter, availability of the first core is determined for executing the micro-event. In response to the determination, execution of the micro-event is allocated to the first core.

By implementing the DES on the first core of the multi-core processor and allocating the first core for execution of the micro-event upon determining the first core to be available, the present subject matter bypasses the addition of the micro-event to the event queue of the Centralized Event Scheduler (CES) for execution on a core of the multi-core processor. As a result, the latency associated with the involvement of the CES for managing allocation of cores of the multi-core processor for execution of the micro-event is reduced.

In another example, generation of a micro-event corresponding to a main event being executed at the first core of the multi-core processor is detected. Thereafter, availability of a second core of the multi-core processor is determined for executing the micro-event. In response to the determination, execution of the micro-event is offloaded to the second core.

By implementing the DES on the first core of the multi-core processor and offloading the execution of the micro-event to the second core upon determining the second core to be available, the present subject matter bypasses the addition of the micro-event to the event queue of the CES for execution on a core of the multi-core processor. As a result, the latency associated with the involvement of the CES for managing allocation of cores of the multi-core processor for execution of the micro-event is reduced.

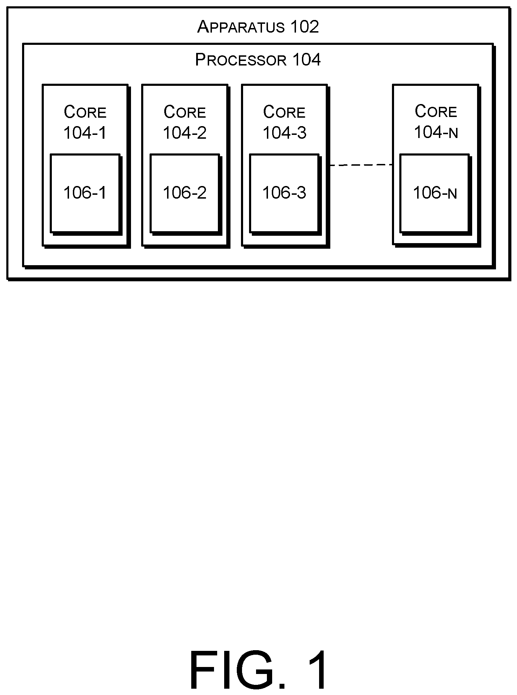

The above techniques are further described with reference to Figs. 1 to 5. It would be noted that the description and the figures merely illustrate the principles of the present subject matter along with examples described herein and would not be construed as a limitation to the present subject matter. It is thus understood that various arrangements may be devised that, although not explicitly described or shown herein, embody the principles of the present subject matter. Moreover, all statements herein reciting principles, aspects, and implementations of the present subject matter, as well as specific examples thereof, are intended to encompass equivalents thereof.

Fig. 1 illustrates schematic of an apparatus 102 for facilitating implementation of a Distributed Event Scheduler (DES) on a core of a multi-core processor, in accordance with an example of the present subject matter. Examples of the apparatus 102 may include, but are not limited to, smartphones, tablets, laptops, desktop computers, servers, network routers, embedded systems, wearable devices, Internet of Things (IoT) devices, automotive computing systems, industrial control systems, medical devices, gaming consoles, and any other computing devices that utilize multi-core processors for executing multiple tasks or processes concurrently.

The apparatus 102 may include a processor 104. The processor 104 may be a multi-core processor and may include a plurality of cores 104-1, 104-2, 104-3, ..., 104-n. In an example, a core of the multi-core processor, such as a first core 104-1, may fetch and execute computer-readable instructions 106-1 stored in a memory (not depicted in FIG. 1), to facilitate implementation of the DES on the first core 104-1, amongst other functions.

It would be noted that the plurality of cores 104-2, 104-3, ..., 104-n may each fetch and execute their respective computer-readable instructions 106-2, 106-3, ..., 106-n to implement the DES, similar to the first core 104-1. However, for the ease of explanation, the manner in which the DES is implemented on a core of the multi-core processor has been explained with reference to the first core 104-1. It would be noted that while the implementation of DES is explained primarily with reference to the first core 104-1, the principles and techniques applies analogously to the other cores of the multi-core processor.

In an example, the first core 104-1 may execute a main event. During the execution of the main event, the first core 104-1 may detect generation of a micro-event corresponding to the main event. Upon detecting the generation of the micro-event, the first core 104-1 may determine availability of the first core for executing the micro-event. That is, the first core 104-1 may determine if the micro-event can be executed locally on the first core 104-1. If it is determined that the micro-event can be executed on the first core 104-1, the first core 104-1 may allocate execution of the micro-event to the first core. That is, the first core 104-1 may locally execute the micro-event.

By implementing the DES on the first core 104-1 and allocating the first core 104-1 for execution of the micro-event upon determining the first core 104-1 to be available, the present subject matter bypasses the addition of the micro-event to the event queue of the Centralized Event Scheduler (CES) for execution on a core of the multi-core processor. As a result, the latency associated with the involvement of the CES for managing allocation of cores of the multi-core processor for execution of the micro-event is reduced.

Further details related to implementation of the DES on the first core 104-1 is described in conjunction with the forthcoming figures.

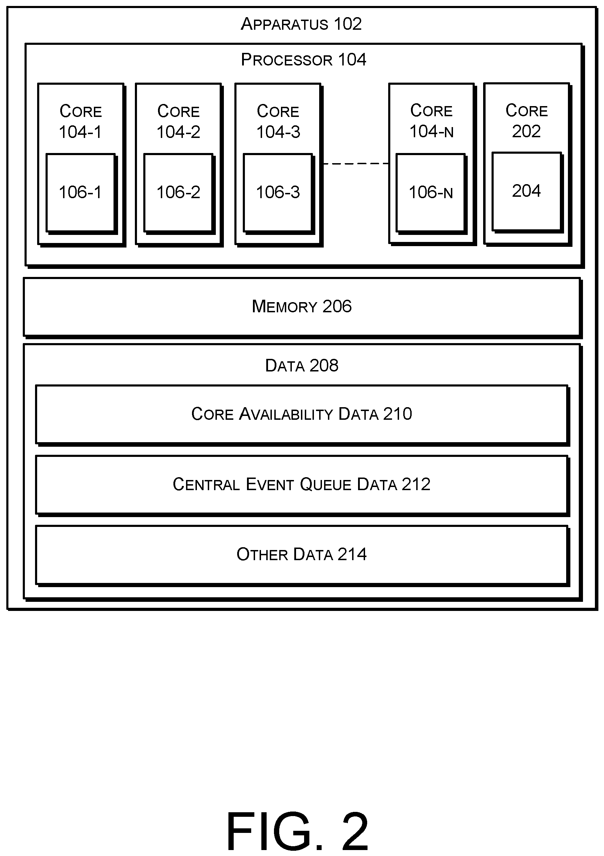

Fig. 2 illustrates the schematic of the apparatus 102 for facilitating implementation of the DES on the first core 104-1 of the multi-core processor, in accordance with another example of the present subject matter.

As already described, the apparatus 102 may include the processor 104. The functions of various elements shown in the Figs., including any functional blocks labelled as "processor", may be provided through the use of dedicated hardware as well as hardware capable of executing instructions. Further, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the processor 104.

The processor 104 may be a multi-core processor, where the processor 104 may include the plurality of cores 104-1, 104-2, 104-3, ..., 104-n. The first core 104-1 may fetch and execute computer-readable instructions 106-1 to facilitate implementation of the DES on the first core 104-1, amongst other functions.

In an example, in addition to the plurality of cores 104-1, 104-2, 104-3, ..., 104-n, the processor 104 may further include a control core 202. In an example, the control core 202 may fetch and execute computer-readable instructions 204 to facilitate implementation of a Centralized Event Scheduler (CES) on the control core 202, amongst other functions.

The apparatus 102 may further include a memory 206. The memory 206 may be a computer-readable medium, examples of which comprise volatile memory (e.g., RAM), and/or non-volatile memory (e.g., Erasable Programmable read-only memory, i.e., EPROM, flash memory, etc.). The memory 206 may be an external memory, or internal memory, such as a flash drive, a compact disk drive, an external hard disk drive, or the like. The memory 206 may further comprise data which either may be utilized or generated during the operation of the apparatus 102. In an example, the memory 206 may be accessible to each of the plurality of cores 104-1, 104-2, 104-3, ..., 104-n.

The apparatus 102 may further comprise data 208 that may be utilized or generated by the apparatus 102 while performing a variety of functions. In an example, the data 208 comprises core availability data 210, central event queue data 212, and other data 214. The other data 214, amongst other things, may serve as a repository for storing data that is processed, or received, or generated as a result of the execution of the instructions by the plurality of cores 104-1, 104-2, 104-3. ..., 104-n and the control core 202. In an example, the data 208 may be stored in the memory 206.

In an example, the first core 104-1 may execute a main event. During the execution of the main event, the first core 104-1 may detect generation of a micro-event corresponding to the main event. The first core 104-1 may detect generation of a micro-event by monitoring triggers or conditions within the main event execution. The triggers may include, but are not limited to, encountering certain instruction types, reaching predefined checkpoints in the code, detecting data dependencies, identifying resource conflicts, or receiving interrupts or signals from other system components. The first core 104-1 may also utilize dedicated hardware counters, performance monitoring units, or specialized instructions to track and identify potential micro-events. Additionally, the first core 104-1 may employ software-based techniques such as code annotations, runtime analysis, or event listeners to facilitate the detection of micro-events during the execution of the main event.

Upon detecting the generation of the micro-event, the first core 104-1 may determine availability of the first core for executing the micro-event. That is, the first core 104-1 may determine if the micro-event can be executed locally on the first core 104-1.

To determine if the micro-event can be executed locally, the first core 104-1 may assess various factors such as its current workload, available processing capacity, power consumption status, thermal conditions, and priority of the micro-event. The first core 104-1 may also check its internal task queue, evaluate the estimated execution time of the micro-event, and consider any specific hardware requirements of the micro-event. Additionally, the first core 104-1 may analyse potential conflicts with ongoing processes, examine memory availability, and consider any timing constraints associated with the micro-event. The first core 104-1 may also consult a local policy table that defines rules for micro-event execution based on system state and event characteristics. In an example, the first core 104-1 may also perform a quick cost-benefit analysis to determine if local execution would be more efficient than offloading the micro-event to another core or the centralized scheduler.

If it is determined that the micro-event can be executed on the first core 104-1, the first core 104-1 may allocate execution of the micro-event to the first core. That is, the first core 104-1 may locally execute the micro-event. On the other hand, if the first core 104-1 determines that the micro-event cannot be executed locally, the first core 104-1 may determine availability of a second core, such as the core 104-2, from amongst the plurality of cores 104-1, 104-2, 104-3, ..., 104-n to for executing the micro-event.

In an example, the first core 104-1 may determine the availability of the second core 104-2 based on a bitmap. The bitmap may include a plurality of bits corresponding to the plurality of cores 104-1, 104-2, 104-3, ..., 104-n, where the plurality of cores 104-1, 104-2, 104-3, ... , 104-n may toggle the plurality of bits to indicate their availability for executing various micro-events. The bitmap may be stored in the core availability data 210. To determine the availability of the second core 104-2, the first core 104-1 may read a bit corresponding to the second core 104-2 in the bitmap. If the first core 104-1 determines the bit to be set, the first core 104-1 may determine the second core 104-2 to be available. In such a situation, the first core 104-1 may offload the execution of the micro-event to the second core 104-2.

By implementing the DES on the first core 104-1 and offloading the execution of the micro-event to the second core 104-2 upon determining the second core 104-2 to be available, the present subject matter bypasses the addition of the micro-event to the event queue of the CES for execution on a core of the multi-core processor. As a result, the latency associated with the involvement of the CES for managing allocation of cores of the multi-core processor for execution of the micro-event is reduced.

On the other hand, if the first core 104-1 determines that the bit is unset, the first core 104-1 may determine that the second core 104-2 is not available for executing the micro-event.

The first core 104-1 may determine the second core 104-2 to be unavailable in other situations as well. For instance, there may be a situation where the first core 104-1 and the control core 202 may simultaneously determine the availability of the second core 104-2, e.g., by reading the bit corresponding to the second core 104-2 in the bitmap. In an example, the control core 202 may have a higher priority as compared to the plurality of cores 104-1, 104-2, 104-3, ..., 104-n. In the example, if the first core 104-1 and the control core 202 simultaneously access the second core 104-2, the second core 104-2 may prioritize the request from the control core 202, set its availability bit to indicate unavailability, and begin executing the task assigned by the control core 202. In such a situation, the first core 104-1 may determine the second core 104-2 to be unavailable.

If the first core 104-1 determines the second core 104-2 to be unavailable for executing the micro-event, the first core 104-1 may add the micro-event to an event queue corresponding to the CES. The event queue may be stored in the central event queue data 212 and may be accessible to the control core 202.

In an example, upon addition of the micro-event to the event queue, the control core 202 may identify a core from the plurality of cores 104-1, 104-2, 104-3, ..., 104-n for execution of the micro-event. In the example, to identify the core for execution of the micro-event, the control core 202 may employ various scheduling algorithms and heuristics. For instance, the control core 202 may consider factors, such as the micro-event's priority, estimated execution time, resource requirements, and dependencies on other events or micro-events. The control core 202 may also take into account the current workload distribution across the plurality of cores 104-1, 104-2, 104-3, ..., 104-n, individual processing capabilities of the plurality of cores 104-1, 104-2, 104-3, ..., 104-n, and any power or thermal constraints. The control core 202 may further implement techniques such as load balancing, work stealing, or priority-based pre-emption to optimize the overall performance of the apparatus 102. In some cases, the control core 202 may decide to defer the execution of the micro-event if higher priority tasks are pending or if waiting for certain resources to become available would be more efficient. Additionally, the control core 202 may dynamically adjust its scheduling decisions based on real-time feedback from the plurality of cores 104-1, 104-2, 104-3, ..., 104-n to adapt to changing conditions and maintain optimal performance. The control core 202 may then allocate the micro-event to the identified core for execution.

In an example, the first core 104-1 may maintain a first event sequence, where the first event sequence may include dependency information associated with at least one dependent event that relies on execution of the micro-event for its execution. The first core 104-1 may maintain the first event sequence in the memory 206. In the example, the micro-event may include a resolve function that may be called when the micro-event is executed locally on the first core 104-1. The resolve function may cause the dependency information to be updated to indicate that the execution of the micro-event is complete. In such a situation, the first core 104-1 may facilitate execution of the dependent event by one of: locally executing the micro-event, offloading the micro-event to the second core 104-2, or adding the micro-event to the event queue. The manner in which the first core 104-1 facilitates execution of the dependent event is similar to determination of the appropriate mechanism for execution of the micro-event.

Further, in an example, execution of the micro-event may be reliant on execution of another event at a core other than the first core 104-1, such as core 104-3. In the example, the first event sequence may also include the dependency information associated with the micro-event. In an example, the control core 202 may identify and allocate the first core 104-1 for execution of the main event. In the example, while allocating the first core 104-1 for execution of the main event, the control core 202 may generate and transmit the dependency information associated with a plurality of micro-events corresponding to the main event to the first core 104-1.

The main event may include a second resolve function that may be called upon execution of the main event. The second resolve function may cause the first core 104-1 to analyse dependency information associated with the micro-event to identify if the execution of the other event at the other core 104-3 is complete. In an example, the first core 104-1 may determine that the execution of the other event at the other core 104-3 is complete by checking a status flag in the dependency information that is updated by the other core 104-3 upon execution of the other event. Alternatively, the first core 104-1 may query the other core 104-3 directly or consult a shared memory location that is updated when execution of the other event is completed. If the first core 104-1 determines that the execution of the other event at the other core 104-3 is complete, the first core 104-1 may facilitate execution of the micro-event by one of: locally executing the micro-event, offloading the micro-event to the second core 104-2, or adding the micro-event to the event queue. The manner in which the first core 104-1 facilitates execution of the micro-event is described above and is not reproduced for the sake of brevity.

Moreover, in an example, it may be determined that execution of the micro-event is dependent on another event executable at the second core 104-2. In such a situation, the first core 104-1 may determine availability of the second core 104-2 for executing the micro-event. If the first core 104-1 determines the second core 104-2 to be unavailable for executing the micro-event, the first core 104-1 may execute a register function to register the micro-event in a second event sequence maintained by the second core 104-2. The second core 104-2 may maintain the second event sequence in the memory 206. The first core 104-1 may register the micro-event along with dependency information associated with the micro-event, where the dependency information may be indicative of the reliance of the micro-event on execution of the other event at the second core 104-2. In the example, upon execution of the other event, a resolve function may be called at the second core 104-2. In response to calling of the resolve function, the second core 104-2 may analyse the second event sequence and determine that the micro-event is to be executed. In such a situation, the second core 104-2 may facilitate execution of the micro-event by one of locally executing the micro-event, offloading the micro-event to another core from the plurality of cores, or adding the micro-event to the event queue. The second core 104-2 may facilitate execution of the micro-event in a manner similar to the first core 104-1.

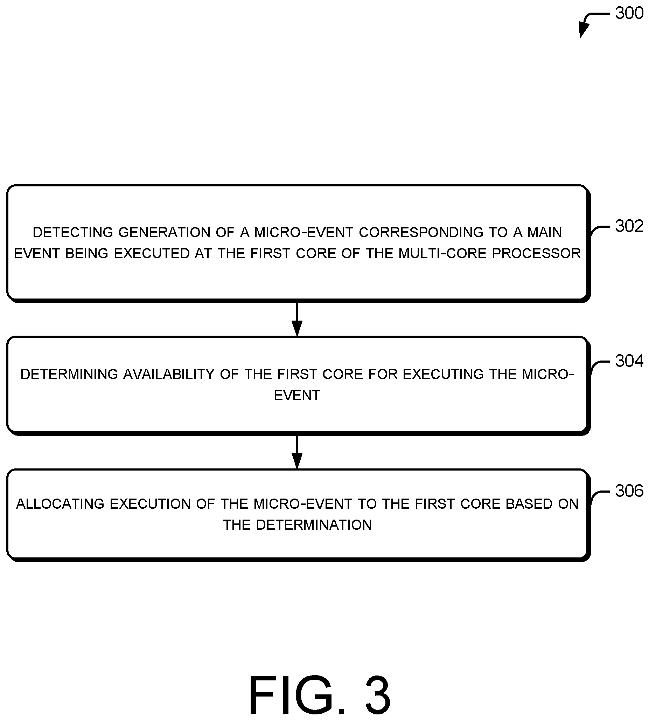

Figs. 3, 4, and 5 illustrate methods 300, 400, and 500 for implementing the DES on the first core of the multi-core processor, in accordance with examples of the present subject matter. Although the methods 300, 400, and 500 may be implemented in a variety of devices, for the ease of explanation, the description of the methods 300, 400, and 500 is provided in reference to the above-described apparatus 102. The order in which the methods 300, 400, and 500 are described is not intended to be construed as a limitation, and any number of the described method blocks may be combined in any order to implement the methods 300, 400, and 500, or an alternative method.

It may be understood that blocks of the methods 300, 400, and 500 may be performed in the apparatus 102. The blocks of the methods 300, 400, and 500 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

Fig. 3 illustrates a method for implementing the DES on the first core, in accordance with an example of the present subject matter.

At block 302, generation of a micro-event corresponding to a main event being executed at the first core of the multi-core processor is detected. In an example, generation of the micro-event may be detected by monitoring triggers or conditions within the main event execution. The triggers may include, but are not limited to, encountering certain instruction types, reaching predefined checkpoints in the code, detecting data dependencies, identifying resource conflicts, or receiving interrupts or signals from other system components. Dedicated hardware counters, performance monitoring units, or specialized instructions may also be used to track and identify potential micro-events. Additionally, software-based techniques such as code annotations, runtime analysis, or event listeners may be employed to facilitate the detection of micro-events during the execution of the main event.

At block 304, availability of the first core for executing the micro-event is determined. That is, it may be determined if the micro-event can be executed locally on the first core. To determine if the micro-event can be executed locally, various factors, such as current workload of the first core, available processing capacity of the first core, power consumption status of the first core, thermal condition of the first core, and priority of the micro-event, may be accessed. Additionally, to determine if the micro-event can be executed on the first core, internal task queue of the first core may be checked, estimated execution time of the micro-event may be evaluated, and any specific hardware requirements of the micro-event may also be considered.

At block 306, execution of the micro-event is allocated to the first core based on the determination. That is, if it is determined that the micro-event can be executed on the first core, the micro-event is allocated to be locally executed on the first core.

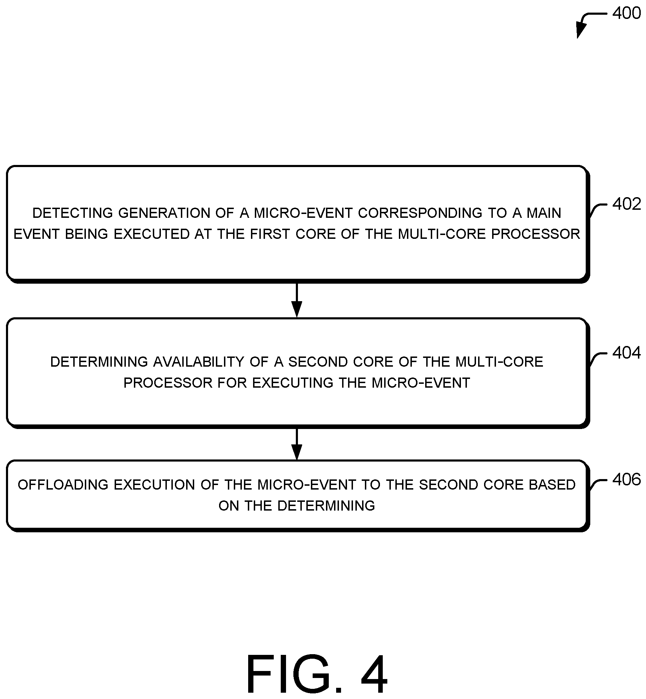

Fig. 4 illustrates the method for implementing the DES on the first core, in accordance with another example of the present subject matter.

At block 402, generation of a micro-event corresponding to a main event being executed at the first core of the multi-core processor is detected.

At block 404, availability of a second core of the multi-core processor for executing the micro-event is determined. In an example, prior to the determination, the first core is ascertained to be unavailable for executing the micro-event. In the example, availability of the second core is determined based on a bitmap comprising a plurality of bits corresponding to the plurality of cores. The bitmap may include a plurality of bits corresponding to the plurality of cores, where the plurality of cores may toggle the plurality of bits to indicate their availability for executing various micro-events. To determine the availability of the second core, a bit corresponding to the second core in the bitmap is read. If the bit is determined to be set, the second core is determined to be available.

At block 406, execution of the micro-event is offloaded to the second core based on the determination.

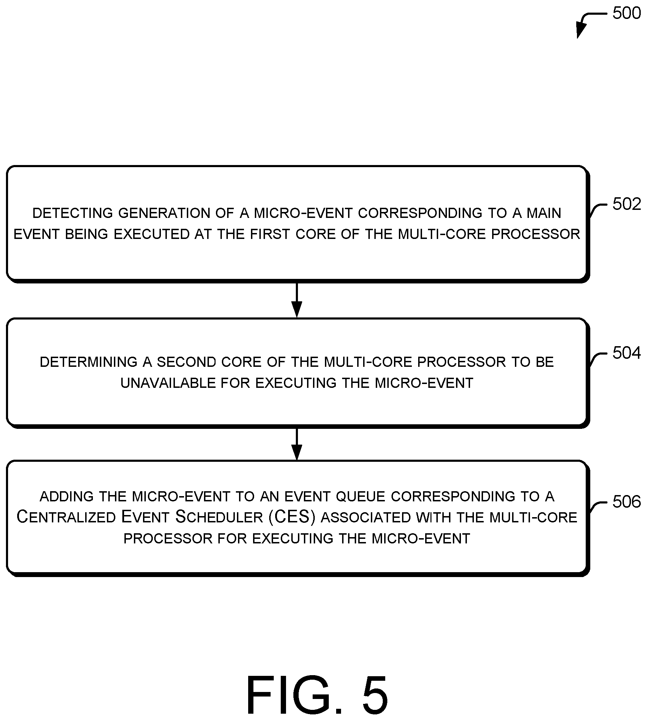

Fig. 5 illustrates the method for implementing the DES on the first core, in accordance with yet another example of the present subject matter.

At block 502, generation of a micro-event corresponding to a main event being executed at the first core of the multi-core processor is detected.

At block 504, a second core of the multi-core processor is determined to be unavailable for executing the micro-event.

In an example, prior to the determination, the first core may be ascertained to be unavailable for executing the micro-event. In the example, availability of the second core is determined based on a bitmap comprising a plurality of bits corresponding to the plurality of cores. The bitmap may include a plurality of bits corresponding to the plurality of cores, where the plurality of cores may toggle the plurality of bits to indicate their availability for executing various micro-events. To determine the availability of the second core, a bit corresponding to the second core in the bitmap is read. If the bit is determined to be unset, the second core is determined to be unavailable.

At block 506, the micro-event is added to an event queue corresponding to a Centralized Event Scheduler (CES) associated with the multi-core processor for executing the micro-event. In an example, upon addition of the micro-event to the event queue, a core may be identified from the plurality of cores for execution of the micro-event. The micro-event may then be offloaded to the identified core for execution.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. An apparatus for implementing a Distributed Event Scheduler (DES) on a first core of a multi-core processor, the apparatus comprising:
at least the first core and at least one memory storing instructions that, when executed by at least the first core, cause the apparatus at least to:
detect generation of a micro-event corresponding to a main event being executed at the first core of the multi-core processor;
determine availability of the first core for executing the micro-event; and
allocate execution of the micro-event to the first core based on the determination.

2. The apparatus as claimed in claim 1, wherein at least the first core further causes the apparatus to determine availability of a second core of the multi-core processor for executing the micro-event upon determining the first core to be unavailable for executing the micro-event.

3. The apparatus as claimed in claim 2, wherein at least the first core further causes the apparatus to offload the micro-event to the second core upon determining the second core to be available for executing the micro-event.

4. The apparatus as claimed in claim 2, wherein at least the first core further causes the apparatus to offload the micro-event to an event queue corresponding to a Centralized Event Scheduler (CES) associated with the multi-core processor for executing the micro-event upon determining the second core to be unavailable for executing the micro-event.

5. The apparatus as claimed in claim 4, wherein to identify that the second core is unavailable, at least the first core causes the apparatus to detect a request for the second core from a CES associated with the multi-core processor.

6. The apparatus as claimed in claim 2, wherein at least the first core causes the apparatus to determine the availability of the second core based on a bitmap comprising a plurality of bits corresponding to a plurality of cores of the multi-core processor.

7. The apparatus as claimed in claim 1, wherein at least the first core causes the apparatus to maintain a first event sequence comprising dependency information associated with at least one dependent event, wherein the dependency information indicates that the at least one dependent event is reliant on execution of the micro-event for execution, and wherein at least the first core further causes the apparatus to:
update the dependency information to indicate that the execution of the micro-event is complete upon execution of the micro-event on the first core; and
allocate execution of the at least one dependent event to the first core based on availability of the first core for execution of the at least one dependent event.

8. The apparatus as claimed in claim 1, wherein at least the first core causes the apparatus to maintain a first event sequence comprising dependency information associated with a plurality of micro-events corresponding to the main event, wherein dependency information associated with the micro-event indicates that the micro-event is reliant on execution of another event at a core other than the first core, and wherein the at least the first core further causes the apparatus to:
analyze the dependency information associated with the micro-event to determine that the execution of the other event at the other core is complete; and
allocate execution of the micro-event to the first core based on availability of the first core for execution of the at least one dependent event.

9. The apparatus as claimed in claim 2, wherein at least the first core causes the apparatus to maintain a first event sequence comprising dependency information associated with a plurality of micro-events corresponding to the main event, wherein dependency information associated with the micro-event indicates that the micro-event is reliant on execution of another event at the second core, and wherein the at least the first core further causes the apparatus to:
determine the second core to be unavailable for executing the micro-event; and
register the micro-event and the dependency information associated with the micro-event in a second event sequence maintained by the second core to facilitate execution of the micro-event on the second core.

10. A method for implementing a Distributed Event Scheduler (DES) on a first core of a multi-core processor, the method comprising:
detecting generation of a micro-event corresponding to a main event being executed at the first core of the multi-core processor;
determining availability of a second core of the multi-core processor for executing the micro-event; and
offloading execution of the micro-event to the second core based on the determining.

11. The method as claimed in claim 10, wherein prior to the determining, the method comprises ascertaining the first core to be unavailable for executing the micro-event.

12. The method as claimed in claim 10, wherein the method comprises offloading the micro-event to an event queue corresponding to a Centralized Event Scheduler (CES) associated with the multi-core processor for executing the micro-event upon determining the second core to be unavailable for executing the micro-event.

13. The method as claimed in claim 12, wherein the determining comprises detecting a request for the second core from a CES associated with the multi-core processor.

14. The method as claimed in claim 10, wherein determining the availability of the second core is based on a bitmap comprising a plurality of bits corresponding to a plurality of cores of the multi-core processor.

15. A method for implementing a Distributed Event Scheduler (DES) on a first core of a multi-core processor, the method comprising:
detecting generation of a micro-event corresponding to a main event being executed at the first core of the multi-core processor;
determining a second core of the multi-core processor to be unavailable for executing the micro-event; and
adding the micro-event to an event queue corresponding to a Centralized Event Scheduler (CES) associated with the multi-core processor for executing the micro-event.

16. The method as claimed in claim 15, wherein prior to the determining, the method comprises ascertaining the first core to be unavailable for executing the micro-event.

17. The method as claimed in claim 15, wherein the determining comprises detecting a request for the second core from the CES.

18. The method as claimed in claim 15, wherein the determining is based on a bitmap comprising a plurality of bits corresponding to a plurality of cores of the multi-core processor.
